# NEUE EUROPÄISCHE PATENTSCHRIFT

(11) **EP 0 570 696 B2**
(45) Veröffentlichungstag und Bekanntmachung des Hinweises auf die Entscheidung über den Einspruch: **11.08.1999**
(45) Hinweis auf die Patenterteilung: 11.09.1996
(21) Anmeldenummer: 93105869.7
(22) Anmeldetag: 08.04.1993
(51) Int. Cl.: F27B 7/26, F27B 7/22

(54) **Drehrohr**
Rotary drum
Tambour rotatif

(30) Priorität: 18.05.1992 DE 4216428
(43) Veröffentlichungstag der Anmeldung: 24.11.1993
(73) Patentinhaber: KRUPP POLYSIUS AG, 59269 Beckum (DE)
(72) Erfinder: Kästingschäfer, Gerhard, Dipl.-Ing., W-4724 Wadersloh (DE); Pingel, Herbert, Dipl.-Ing., W-4724 Wadersloh 2 (DE); auf dem Venne, Johannes, W-4722 Ennigerloh (DE); Peterwerth, Bernhard, Dipl.-Ing., W-4518 Bad Laer (DE); Giesemann, Reinhard, Dipl.-Ing., W-4834 Harsewinkel (DE)
(74) Vertreter: Tetzner, Volkmar, Dr.-Ing. Dr. jur.

(56) Entgegenhaltungen:
- EP-A- 0 051 926
- DE-A- 1 758 506
- DE-A- 2 446 941
- DE-A- 3 540 590
- GB-A- 200 000
- GB-A- 1 040 857
- GB-A- 1 430 013
- GB-A- 1 527 419
- GB-A- 2 048 396
- US-A- 3 818 777
- Zement-Kalk-Gips, Nr.8/1991, Seite 404-407, "Konstruktive Merkmale des PYRORAPID-Kurzdrehofens"

## Beschreibung

Die Erfindung betrifft ein Drehrohr mit relativ großen Abmessungen, entsprechend dem Oberbegriff des Anspruches 1.

Drehrohre der vorausgesetzten Art haben verhältnismäßig große Durchmesser- und Längenabmessungen und kommen in der Praxis für verschiedene Anwendungsfälle zum Einsatz, wie z.B. bei Drehrohröfen, Drehrohrkühlem, Drehtrommeltrocknern und dgl. Bei diesen bekannten Ausführungsformen sind auf den Drehrohrmänteln mehrere Laufringe mit axialen Abständen zueinander angebracht, wobei jeder Laufring auf einer Laufrollenstation mit zwei symmetrisch zu beiden Seiten der vertikalen Längsmittelachse des Drehrohres angeordneten Laufrollen drehbar abgestützt ist. Die Drehrohre von Drehrohröfen werden dabei häufig auf drei oder mehr über die Drehrohrlänge verteilten Laufrollenstationen abgestützt, wobei die zusammenwirkenden Laufrollen und Laufringe glatte Umfangsflächen aufweisen und wobei die Laufringe unter Zwischenanordnung von Unterlagsplatten lose und geschmiert auf dem Außenumfang des Drehrohres angebracht sind (diese Schmierung ist notwendig, um Materiatausbrüche an den Unterlagsplatten zu vermeiden). Der Drehantrieb dieser bekannten Drehrohre erfolgt im allgemeinen über drehfest auf dem Drehrohrmantel angebrachte Zahnkränze sowie über Antriebsritzel, die mit einem Untersetzungsgetriebe und wenigstens einem Antriebsmotor in Verbindung stehen. Die so gebildeten Antriebseinrichtungen bedingen nicht nur technisch anspruchsvolle Bauteile, wie z.B. Zahnkränze, Antriebsritzel u.dgl., sondern auch einen entsprechend hohen Schmierungs- und Wartungsaufwand.

Aus der US-A-3 818 777 ist es auch bereits bekannt, ein Drehrohr mit relativ großen Abmessungen und zylindrischem Mantel über mehrere Laufringe auf den Laufrollen von Laufrollenstationen drehbar abzustützen und zu lagem. Hierbei weist offensichtlich jede Laufrolle einen eigenen Antrieb mit Hydraulikmotor in der Weise auf, daß jeweils ein Reibradantrieb für den zughörigen Laufring und damit für das Drehrohr gebildet wird. In der zugehörigen Zeichnung dieser Druckschrift sind nur zwei abgebrochene Teil-Längsabschnitte des zugehörigen Drehrohrmantels veranschaulicht, von denen jeder Teil-Längsabschnitt einen Laufring trägt. Über die GesamtLänge dieses bekannten Drehrohres sowie über die zugehörige Anzahl der über die Gesamtlänge verteilten Laufringe ist hier nichts Näheres ausgesagt.

Was nun die Lagerung jeder Laufrolle bei diesem bekannten Drehrohr anbelangt, so ist die umlaufende Laufrolle gleitbeweglich auf einer festen, nicht drehenden Achse angeordnet und geführt, die durch zwei Lagerböcke getragen wird. Auf dieser Achse ist ein Zylindersegment gelenkig mit einem Freiheitsgrad um eine zur Rollenachse und zur Radialbelastung senkrechten Achse kippbar angeordnet. Das Gelenk zwischen dem Zylindersegment und der nicht drehenden Achse besteht aus einer halbzylindrischen Fläche eines am Zylindersegment starr befestigten Querkeiles und einer halbzylindrischen Fläche einer an der nicht drehenden Achse starr befestigten Schale.

Es ist außerdem aus der EP-A-51 926 ein der zuvor beschriebenen Ausführung ähnliches Drehrohr bekannt, bei dem der Drehrohrmantel ebenfalls auf Laufrollenpaaren gelagert ist, von denen jede Rolle durch einen gesonderten hydrostatischen Motor angetrieben wird, wobei jede Laufrolle einen Reibradantrieb für das Drehrohr (über den zugehörigen Laufring) bildet. Auch in diesem Falle ist nur ein Teil-Längsabschnitt des Drehrohres bzw. Drehrohrmantels in der Zeichnung veranschaulicht; in dieser Druckschrift wird jedoch ausdrücklich beansprucht, daß mehr als zwei axial voneinander angeordnete Rollenpaare und somit Laufrollenstationen vorgesehen sind.

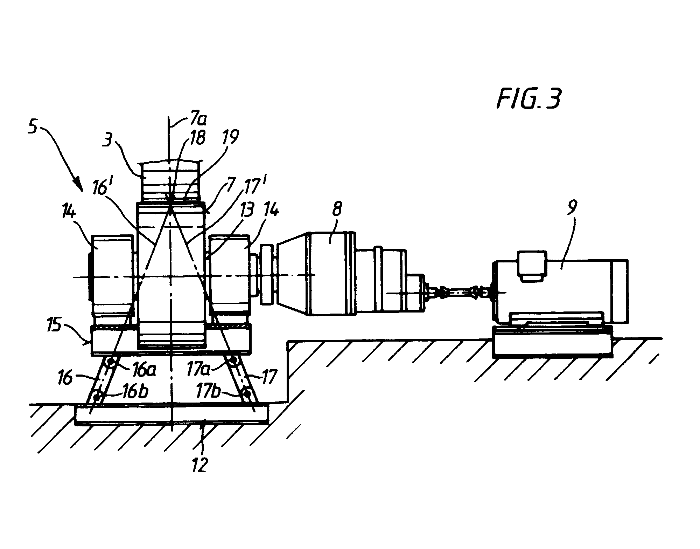

Ein Drehrohr der im Oberbegriff des Anspruches 1 vorausgesetzten Art ist beispielsweise aus der DE-B-17 58 506 bekannt. Bei dieser bekannten Ausführung sind auf dem Drehrrohr bzw. der Drehtrommel mindestens zwei Laufringe angeordnet, die auf je zwei paarweise zusammengeordneten Laufrollen drehbar gelagert sind. Die Lager jeder Laufrolle sind hierbei jeweils auf einem Lagerträger montiert, der unabhängig und allseitig schwenkbar auf einem Maschinengestell abgestützt und dabei mit diesem Maschinengestell an einer Stelle verbunden sein soll, die in der zur Laufrollenachse normalen Symmetrieebene der Rolle liegt. Das Maschinengestell ist offenbar ortsfest angeordnet. Wenn man in diesem Sinne die allseitige Schwenkbarkeit jedes Lagerträgers und somit auch der sie tragenden Laufrolle anhand der dortigen Fig.3 betrachtet, dann erkennt man dort, daß bei dieser bekannten Ausführung ganz offensichtlich nicht nur eine Kippbeweglichkeit, sondern eine Schwenkbeweglichkeit der Laufrolle in allen Richtungen gegeben ist. Quer zur Laufrollenachse betrachtet (vgl. dortige Fig.3) hat jeder Lagerträger die Form eines rechtwinkligen, gleichschenkligen Bügels, dessen beide Schenkelenden über elastische Unterlagen auf Winkeleisen des Maschinengestells besfestigt sind, wobei auf dem einen Schenkel des Lagerträgers die Lager der Laufrollenachse abgestützt sind, während das freie Ende des anderen Schenkels noch zusätzlich einen Zapfen am entsprechenden Winkeleisen befestigt ist.

Der Erfindung liegt nun die Aufgabe zugrunde, ein Drehrohr der im Oberbegriff des Anspruches 1 vorausgesetzten Art zu schaffen, das sich bei einfachem und wirkungsvollem Drehantrieb durch eine besonders kostengünstige und doch zuverlässige Auflagerung sowie durch eine besonders vorteilhafte kippbewegliche Abstützung der Laufrollen auszeichnet.

Diese Aufgabe wird erfindungsgemäß durch die Kombination der im Anspruch 1 angegebenen Merkmale gelöst.

Vorteilhafte Ausgestaltungen der Erfindung sind Gegenstand der Unteransprüche.

Bei der Erfindung wird zunächst von einer Ausführung ausgegangen, bei der der Drehrohrmantel nur zwei drehfest angebrachte Laufringe trägt und dieser Drehrohrmantel über seine beiden Lauf ringe auf zwei Laufrollenstationen gelagert bzw. abgestützt ist, wodurch sich eine statisch bestimmte Lagerung des Drehrohres ergibt. Gerade bei der hier vorgesehenen Drehantriebseinrichtung, die in Form eines Reibradantriebes ausgeführt und von wenigstens einer der beiden Laufrollenstationen gebildet ist, von der zumindest eine Laufrolle - über wenigstens ein Getriebe und wenigstens einen Motor - angetrieben werden kann, ist es besonders zweckmäßig und vorteilhaft, daß zumindest die beiden Laufrollen der gleichzeitig die Antriebseinrichtung bildenden Laufrollenstation in der erfindungsgemäßen Weise kippbeweglich auf einer ortsfesten Stützfläche abgestützt sind. Die Laufrollen weisen nämlich eine kippbewegliche Abstützung in Form eines viergliedrigen Gelenkgetriebes auf, das durch die Laufrollen-Tragkonstruktion, eine durch eine Fundamentplatte gebildete, ortsfeste Stützfläche sowie zwei gelenkig zwischen Tragkonstruktion und Stützfläche kurbelartig angeordnete Schwingen gebildet ist, die in der Weise gegeneinander geneigt sind, daß der Drehpunkt des Gelenkgetriebes im Bereich des Schnittpunktes der horizontalen Kontaktlinie zwischen Laufrolle und Laufring mit der vertikalen Laufrollen-Mittelachse liegt. Erfindungsgemäß wird somit besonders vorteilhaft dafür gesorgt, daß sowohl die sich aus Montageungenauigkeiten und einem verkrümmten Drehrohrmantel ergebenden Schrägstellungen der Lauf ringe ausgeglichen als auch die durch Schiefstellungen dieser Laufringe auftretenden zusätzlichen Längsbewegungen des Drehrohres zumindest auf ein vertretbares Minimum herabgesetzt werden. Gerade durch die weiter oben erläuterte statisch bestimmte Lagerung des Drehrohres bzw. Drehrohrmantels in Kombination mit kippbeweglich abgestützten Laufrollen wenigstens einer Laufrollenstation führt zu einer besonders kostensgünstigen und dabei doch äußerst zuverlässigen Auflagerung, bei gleichzeitig relativ einfachem und wirkungsvollem Drehantneb in Form des Reibradantriebes. Das erfindungsgemäße Drehrohr kann also mit relativ einfachen technischen Bauteilen sowohl zuverlässig gelagert als auch zuverlässig angetrieben werden.

Hierbei ist es ferner vorteilhaft, daß zumindest der den Drehantrieb bzw. das Drehantriebsmoment aufnehmende Laufring (oder auch beide Laufringe) als innenverzahnter Laufring ausgebildet und über seine Innenverzahnung drehfest auf dem Drehrohrmantel (durch Verzahnungseingriff mit auf diesem Mantel vorgesehener Außenverzahnung) angebracht ist. Diese verzahnte Laufringbefestigung ist vor allem bei solchen Drehrohren von Vorteil, an deren Innenumfang feuerfeste Futter (Ausmauerungen) vorgesehen sind, die wegen einer geringeren Mantelovalität (durch die gewählte Art der Laufringbefestigung) besonders gute bzw. lange Futterstandzeiten erhalten; dies ist vor allem dann der Fall, wenn das Drehrohr für einen Drehrohrofen ausgeführt ist bzw. einen solchen Drehrohrofen bildet.

Die Erfindung sei nachfolgend anhand einiger in der Zeichnung veranschaulichter Ausführungsbeispiele näher beschrieben. In dieser Zeichnung zeigen
- Fig. 1: eine Längsansicht des auf zwei Laufrollenstationen abgestützten, erfindungsgemäßen Drehrohres;
- Fig.2: eine Querschnittsansicht etwa entlang der Linie 11-11 in Fig.1,
- Fig.3: eine Detail-Ansicht einer angetriebenen Laufrolle mit kippbeweglich abgestützter Sohlplatte.

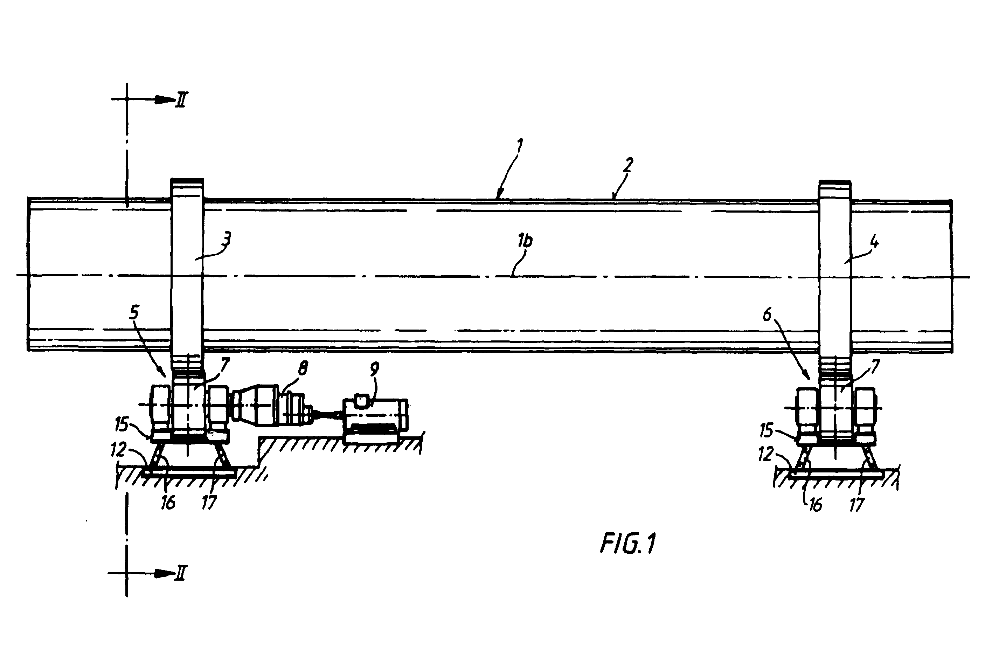

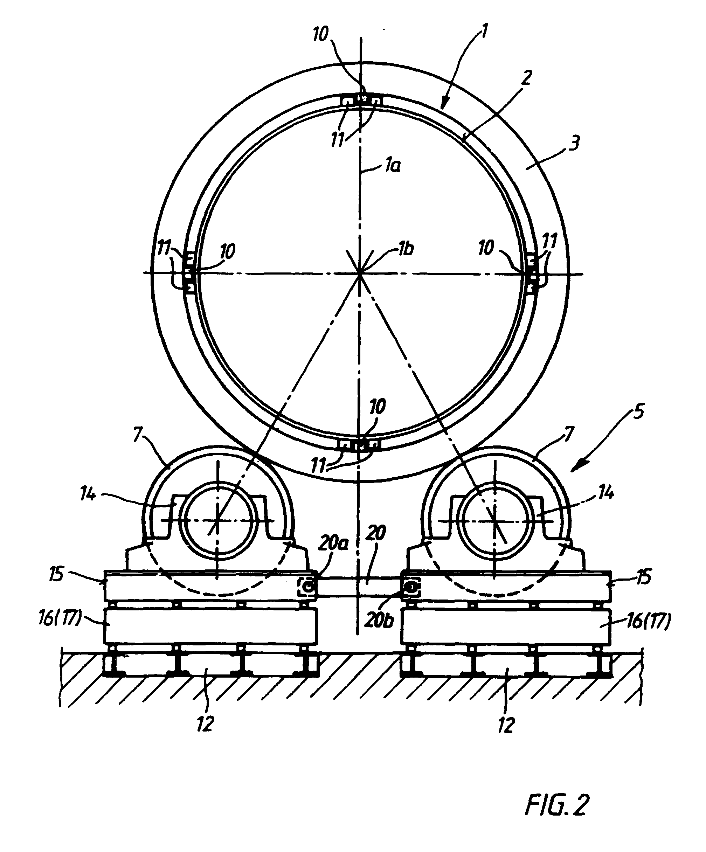

Das erfindungsgemäße Drehrohr sei zunächst anhand der Fig.1 und 2 erläutert. Dieses Drehrohr 1 ist bevorzugt für einen Drehrohrofen bzw. als Drehrohrofen selbst ausgeführt und weist dementsprechend relativ große Durchmesser- und Längenabmessungen auf.

Dieses Drehrohr 1 besitzt einen im wesentlichen zylindrischen Mantel 2, der zwei mit geeignetem axialen Abstand zueinander drehfest angebrachte Lauf ringe 3, 4 trägt. Über diese beiden Lauf ringe 3, 4 ist der Drehrohrmantel 2 und somit das ganze Drehrohr 1 auf zwei Laufrollenstationen 5, 6 drehbar gelagert bzw. abgestützt. Jede Laufrollenstation 5, 6 enthält - wie Fig.2 zeigt - zwei symmetrisch zu beiden Seiten dervertikalen Längsmittelebene la des Drehrohres 1 angeordnete Laufrollen 7. Sowohl alle Laufrollen 7 beider Laufrollenstationen 5, 6 als auch beide Lauf ringe 3, 4 weisen eine glatte Außenumfangsfläche auf.

Das Drehrohr 1 wird von wenigstens einer Drehantriebseinrichtung um seine Längsachse 1b drehend angetrieben. Diese Antriebseinrichtung ist in äußerst vorteilhafter und einfacher Weise in Form eines Reibradantriebes ausgeführt und wird gleichzeitig von der einen, als Laufrollenlagerung bzw. Laufrollenabstützung vorgesehenen Laufrollenstation, nämlich der Laufrollenstation 5 gebildet, von der zumindest eine Laufrolle 7 über ein Getriebe 8 und einen damit gekuppelten Antriebsmotor 9 angetrieben wird. Je nach Größe, Ausführung und Einsatz des Drehrohres 1 kann nur eine Laufrolle 7 oder können beide Laufrollen 7 der Laufrollenstation in der erwähnten Weise angetrieben werden. Aufgrund der bereits weiter oben erläuterten, statisch bestimmten Lagerung dieses Drehrohres 1 auf den beiden Laufrollenstationen wird es im allgemeinen ausreichend und damit auch besonders kostengünstig sein, lediglich eine der beiden Laufrollenstationen in der erwähnten Weise als Reibradantrieb vorzusehen.

Von den beiden Laufringen 3, 4 ist zumindest der den Drehantrieb bzw. das Drehantriebsmoment aufnehmende Laufring 3 als innenverzahnter Laufring ausgebildet, vorzugsweise werden jedoch beide Laufringe 3, 4 mit einer Innenverzahnung versehen, über die der Laufring drehfest auf dem Drehrohrmantel 2 angebracht ist. Eine Möglichkeit für diese Art der drehfesten Anbringung der Laufringe 3, 4 ist in Fig. 2 zu erkennen. Danach kann es bereits ausreichend sein. an mehreren gleichmäßig über den Innenumfang des Lauf ringes (z.B. 3) verteilten Stellen einzelne, nach innen weisende Zähne 10 vorzusehen, die insgesamt die Innenverzahnung bilden. In Anpassung an die Lage und Größe dieser Zähne 10 für die Innenverzahnung sind an der Außenumfangsseite des Drehrohrmantels 2 jeweils zwei mit Umfangsabstand voneinander angeordnete, nach außen weisende Außenzähne 11 angebracht, die in entsprechender Weise mit den Zähnen 10 der Lauf ringe 3. 4 in Verzahnungseingriff stehen.

Die Laufrollen 7 sind kippbeweglich abgestützt. wie nachfolgend anhand der Fig. 3 erläutert.

Nach dem Beispiel der Fig.3 sind zumindest die Laufrollen 7 der gleichzeitig die Drehantriebseinrichtung bildenden Laufrollenstation 5 kippbeweglich auf einer ortsfesten Stützfläche abgestützt, die durch eine Fundamentplatte 12 gebildet wird; vorzugsweise sind jedoch - wie Fig.1 veranschaulicht - die Laufrollen 7 beider Laufrollenstationen 5, 6 (also der gleichzeitig als Drehantriebseinrichtung ausgebildeten Laufrollenstation 5 und der lediglich eine Laufrollenlagerung bildenden Laufrollenstation 6) kippbeweglich abgestützt.

Nach dem Beispiel in Fig.3 ist jede Laufrolle 7 über ihre Rollenachse 13 in zwei Lagern 14 (Gleit- oder Wälzlager) gelagert, die auf einer Laufrollen-Tragkonstruktion in Form einer Sohlplatte 15 getragen werden.

Jede kippbewegliche Abstützung der kippbeweglichen Laufrollen 7 ist in Form eines viergliedrigen Gelenkgetriebes ausgeführt, das durch die Sohlplatte 15, die ortsfeste Fundamentplatte 12 sowie zwei gelenkig zwischen Sohlplatte 15 und Fundamentplatte 12 kurbelartig angeordnete Schwingen 16 und 17 gebildet ist, d.h. die Schwingen 16, 17 weisen an ihren freien Enden Schwenkgelenke 16a, 16b bzw. 17a, 17b auf, über die sie jeweils einerseits mit der Sohlplatte 15 und andererseits mit der Fundamentplatte 12 gelenkig verbunden sind. Diese Schwingen 16, 17 sind in ihrer Länge frei wählbar, und zwar zweckmäßig in Anpassung an die jeweilige Einbausituation, Lagergröße usw. Die Schwingen 16, 17 weisen dabei jedoch in bezug auf das durch das Gelenkgetriebe gebildete Koppelviereck vorzugsweise gleich große Längen auf, und sie sind in ihrer Grundstellung unter gleichen Winkeln in der aus Fig.3 ersichtlichen Weise derart gegeneinander geneigt, daß ihre gedachten Verlängerungslinien 16' bzw. 17' sich in einem Drehpunkt 18 für dieses Gelenkgetriebe schneiden. Dies bedeutet, daß der Drehpunkt 18 dieses Gelenkgetriebes im Bereich des Schnittpunktes liegt bzw. damit zusammenfällt, der durch die horizontale Kontaktlinie 19 zwischen der Laufrolle 7 und dem Laufring 3 mit der vertikalen Laufrollen-Mittelachse 7a gebildet wird.

Diese Art der kippbeweglichen Abstützung für jede kippbewegliche Laufrolle 7 sorgt in äußerst vorteilhafter Weise dafür, daß sowohl die sich aus Montageungenauigkeiten und einem verkrümmten Drehrohrmantel ergebenden Schrägstellungen der Laufringe 3, 4 ausgeglichen als auch die durch Schiefstellungen dieser Laufringe 3, 4 auftretenden zusätzlichen Längsbewegungen des Drehrohres 1 zumindest auf ein vertretbares Minimum herabgesetzt werden.

Die zuvor erläuterte kippbewegliche Abstützung jeder Laufrolle 7 in Form eines viergliedrigen Gelenkgetriebes kommt auch in der in Fig.2 veranschaulichten Querschnttsansicht zum Ausdruck. Hier wird besonders deutlich, wie die beiden zu einer Laufrollenstation (hier Laufrollenstation 5) gehörenden Laufrollen 7 mitsamt ihren Sohlplatten 15, ortsfesten Fundamentplatten 12 und den dazwischen angeordneten Schwingen 16, 17 (also den zugehörigen Gelenkgetrieben) zweckmäßig zusammengeordnet sind. Wichtig ist hierbei jedoch, daß die beiden Sohlplatten 15 beider Laufrollen 7 dieser Laufrollenstation 5 durch wenigstens ein Abstandselement 20 verbunden sind, durch das ein gleichbleibender Abstand zwischen diesen beiden Sohlplatten und somit zwischen den beiden von ihnen getragenen Laufrollen 7 aufrechterhalten wird und Spreizkräfte durch die senkrechte Gewichtsbelastung der beiden Laufrollen 7 seitens des Drehrohres 1 aufgenommen werden. Damit hierbei die unabhängige Kippbeweglichkeit für jede Laufrolle 7 (bzw. jede so gebildete Laufrollenlagerung) gewahrt bleiben kann, weist das Abstandselement 20 an seinen Verbindungsstellen mit den Sohlplatten 15 zweckmäßig Verbindungsgelenke 20a, 20b auf.

## Patentansprüche

1. Drehrohr mit relativ großen Abmessungen, enthaltend
a) einen im wesentlichen zylindrischen Mantel (2),
b) zwei Laufrollenstationen (5, 6) mit je zwei symmetrisch zu beiden Seiten der vertikalen Längsmittelebene (1a) des Drehrohres (1) angeordneten Laufrollen (7), auf denen das Drehrohr mit zwei Laufringen (3, 4) drehbar gelagert ist, die eine glatte Umfangsfläche aufweisen und mit axialem Abstand zueinander auf dem Drehrohrmantel (2) angebracht sind,
c) wenigstens eine in Form eines Reibradantriebes ausgeführte Drehantriebseinrichtung für das Drehrohr (1), die von wenigstens einer Laufrollenstation (5) mit zumindest einer antreibbaren Laufrolle (7) gebildet ist, wobei
d) jede Laufrolle (7) über ihre Rollenachse (13) in zwei von einer Tragkonstruktion (15) getragenen Lagern (14) drehbar gelagert ist und zumindest die beiden Laufrollen (7) der gleichzeitig die Drehantriebseinrichtung bildenden Laufrollenstation (5) über die Tragkonstruktion (15) kippbeweglich abgestützt sind,
gekennzeichnet durch die Kombination folgender Merkmale:
e) von den beiden Laufringen (3, 4) ist zumindest der das Drehantriebsmoment aufnehmende Laufring (3) als innenverzahnter Laufring ausgebildet und über seine Innenverzahnung (10) drehfest auf dem Drehrohrmantel (2) angebracht;
f) die Laufrollen (7) weisen eine kippbewegliche Abstützung in Form eines viergliedrigen Gelenkgetriebes auf, das durch die Laufrollen-Tragkonstruktion (15), eine durch eine Fundamentplatte (12) gebildete, ortsfeste Stützfläche sowie zwei gelenkig zwischen Tragkonstruktion und Stützfläche kurbelartig angeordnete Schwingen (16, 17) gebildet ist, die in der Weise gegeneinander geneigt sind, daß der Drehpunkt (18) des Gelenkgetriebes im Bereich des Schnittpunktes der horizontalen Kontaktlinie (19) zwischen Laufrolle (7) und Laufring (3) mit der vertikalen Laufrollen-Mittelachse (7a) liegt.

2. Drehrohr nach Anspruch 1, dadurch gekennzeichnet, daß die beiden Laufrollen-Tragkonstruktionen (15) der Laufrollenstation (5, 6) durch wenigstens ein Abstandselement (20) zur Aufrechterhaltung eines gleichbleibenden Abstandes miteinander verbunden sind.

3. Drehrohr nach Anspruch 1, gekennzeichnet durch seine Ausführung für einen Drehrohrofen.

## Claims

1. Rotary drum with relatively large dimensions, comprising
a) a substantially cylindrical shell (2)
b) two supporting roller stands (5, 6) each having two supporting rollers (7) which are arranged symmetrically on both sides of the vertical longitudinal plane (1a) of the rotary drum (1) and on which the rotary drum is supported by means of two riding rings (3, 4) which have a smooth circumferential surface and are attached to the rotary drum shell (2) and axially spaced from one another,
c) at least one rotary drive arrangement for the rotary drum (1), which is constructed in the form of a friction drive and is formed by at least one supporting roller stand (5) with at least one driveable supporting roller (7),
d) each supporting roller (7) being pivoted via its roll axis (13) by means of two bearings (14) supported by a supporting structure (15) and at least the two supporting rollers (7) of the supporting roller stand (5) which also forms the rotary drive arrangement being tiltably supported by the supporting structure (15),
characterised by the combination of the following features:
e) out of the two riding rings (3, 4) at least the riding ring (3) which takes up the rotary drive moment is constructed with internal teeth and is attached to the rotary drum shell (2) by means of its internal toothing (10) so as to be fixed against rotation;
f) the supporting rollers (7) have a tiltable support in the form of a four-membered linkage which is formed by the supporting roller bearing structure (15), by a stationary supporting surface in the form of a base plate (12) and by two crank-like rockers (16, 17) articulated between the bearing structure and the support surface, which are inclined with respect to one another in such a way that the point of rotation (18) of the linkage lies in the region of intersection of the horizontal line of contact (19) between the supporting roller (7) and riding ring (3) with the vertical central axis (7a) of the supporting roller.

2. Rotary drum as claimed in Claim 1, characterised in that the two supporting roller bearing structures (15) of the supporting roller stand (5, 6) are connected to one another by at least one spacer element (20) in order to maintain a constant spacing.

3. Rotary drum as clamed in Claim 1, characterised by its construction for a rotary kiln.

## Revendications

1. Tube rotatif ayant des dimensions relativement grandes, comprenant :
a) une enveloppe sensiblement cylindrique (2),
b) deux systèmes à galets de roulement (5, 6) dont chacun comprend deux galets de roulement (7) disposés symétriquement des deux côtés du plan vertical longitudinal de symétrie (1a) du tube rotatif (1) et sur lesquels le tube rotatif est monté rotatif au moyen de deux bagues de roulement (3, 4) qui ont une surface circonférentielle lisse et qui sont montées à distance axiale l'une de l'autre sur l'enveloppe (2) du tube rotatif,
c) au moins un dispositif d'entraînement en rotation du tube rotatif (1) qui est réalisé sous la forme d'un entraînement à roue à friction et qui est formé d'au moins un système à galets de roulement (5) comprenant au moins un galet de roulement commandé (7),
d) chaque galet de roulement (7) étant monté rotatif au moyen de son axe (13) dans deux paliers (14) supportés par une charpente de support (15) et au moins les deux galets de roulement (7) du système (5) à galets de roulement formant également le dispositif d'entraînement en rotation prenant appui sur la charpente de support (15) de manière à pouvoir effectuer un mouvement de bascule,
caractérisé par la combinaison des particularités suivantes :
e) au moins celle (3) des deux bagues de roulement (3, 4) qui supporte le couple d'entraînement en rotation est conformée en bague de roulement à denture intérieure et est solidarisée en rotation par sa denture intérieure (10) avec l'enveloppe du tube rotatif (2) ;
f) les galets de roulement (7) comportent un appui pouvant exécuter un mouvement de bascule et ayant la forme d'un mécanisme articulé à quatre éléments qui est constitué de la charpente (15) de support des galets de roulement, d'une surface d'appui fixe formée d'une plaque de fondation (12), ainsi que de deux bielles oscillantes (16, 17) qui sont disposées à la manière de manivelles articulées entre la charpente de support et la surface d'appui et qui sont inclinées l'une vers l'autre de manière que le centre de rotation (18) du mécanisme articulé se trouve dans la région du point d'intersection de la ligne horizontale de contact (19) entre le galet de roulement (7) et la bague de roulement (3) et de l'axe vertical de symétrie (7a) du galet de roulement.

2. Tube rotatif selon la revendication 1, caractérisé en ce que les deux charpentes (15) de support des galets du système à galets de roulement (5, 6) sont reliées par au moins un élément d'entretoisement (20) destiné à maintenir une distance constante entre elles.

3. Tube rotatif selon la revendication 1, caractérisé par son mode de réalisation pour un four tubulaire rotatif.
